# EUROPÄISCHE PATENTANMELDUNG

(11) **EP 1 693 802 A1**
(43) Veröffentlichungstag der Anmeldung: **23.08.2006**
(21) Anmeldenummer: 06003105.1
(22) Anmeldetag: 16.02.2006
(51) Int. Cl.: G07D 7/00, B42D 15/00, B41M 3/14

(54) **Elektronische Merkmale für Wertdokumente**

(30) Priorität: 22.02.2005 DE 102005008003
(71) Anmelder: Hueck Folien GmbH & Co. KG, 92712 Pirk (DE)
(72) Erfinder: Reich, Peter, 92712 Pirk (DE); Müller, Matthias, 92699 Bechtsrieth (DE)
(74) Vertreter: Landgraf, Elvira

(57) **Zusammenfassung**

Wertdokumente mit Sicherheitsmerkmafen, dadurch gekennzeichnet, dass die Wertdokumente eine elektronische Seriennummer und/oder einen elektronischen Datenspeicher aufweisen.

## Beschreibung

Die Erfindung betrifft elektronische Merkmale für Sicherheitsdokumente, beispielsweise elektronische Seriennummern oder elektronische Datenspeicher.

Die Seriennummer auf Wertdokumenten ist üblicherweise in Form einer bestimmten Folge von Zahlen und/oder Buchstaben oder als Strichcode auf das Wertdokument, beispielsweise Banknoten, Gutscheine, Karten, Lose und dergleichen aufgedruckt.
Die Seriennummer kann nur durch optische Abtastsysteme erfasst werden. Dabei kann sich das korrekte Abtasten, beispielsweise durch Verschmutzung, Knicke, Farbveränderungen und dergleichen als schwierig bzw. unmöglich erweisen. Beim Abtasten von Strichcodes muss außerdem die Abtastrichtung korrekt eingehalten werden.

Aufgabe der Erfindung war es elektronische Merkmale für Wertdokumente bereitzustellen, die ein sicheres Identifizieren des einzelnen Wertdokumentes erlauben.

Gegenstand der Erfindung sind daher Wertdokumente mit Sicherheitsmerkmalen, dadurch gekennzeichnet, dass die Wertdokumente eine individualisierte elektronische Seriennummer und/oder einen elektronischen Datenspeicher aufweisen.

Die elektronische Seriennummer wird vorzugsweise im Digitaldruck mit elektrisch leitfähigen Polymeren oder elektrisch leitfähigen Druckfarben aufgebracht.
Zur Einstellung der elektrischen Leitfähigkeit der Druckfarbe können beispielsweise Graphit, Ruß, leitfähige organische oder anorganische Polymere, Metallpigmente (beispielsweise Kupfer, Aluminium, Silber, Gold, Eisen, Chrom und dergleichen), Metalllegierungen wie Kupfer-Zink oder Kupfer-Aluminium oder auch amorphe oder kristalline keramische Pigmente wie ITO und dergleichen zugegeben werden. Weiters können auch dotierte oder nicht dotierte Halbleiter wie beispielsweise Silicium, Germanium, Galliumarsenid oder Selen oder Ionenleiter wie amorphe oder kristalline Metalloxide oder Metallsulfide als Zusatz verwendet werden. Femer können zur Einstellung der elektrischen Eigenschaften der Schicht polare oder teilweise polare Verbindungen, wie Tenside oder unpolare Verbindungen wie Silikonadditive oder hygroskopische oder nicht hygroskopische Salze verwendet oder zugesetzt werden.

Die elektrisch leitfähigen Polymere können beispielsweise Polyacetylen, Poly-p-phenylen, Polypyrrole, Polythiophene, Poly-p-phenylenvinylen, niedermolekulare makrocyclische Halbleiter, Organopolysilane, Polyschwefelnitrid und/oder Polyaniline und/oder deren Derivate sein. Besonders bevorzugt werden als elektrisch leitfähige Polymere Polyanilin oder Polyethylendioxythiophen oder Polyethylendioxythiphenderivate verwendet.

Die elektrisch leitfähigen Polymerschichten können je nach Verwendung jeweils eine Dicke von 0,1 - 50 µm, vorzugsweise 0,5 - 10 µm aufweisen. Für bestimmte Verwendungen sind dünnere Schichten von 0,001 - 50 µm, bevorzugt 0,05 -10 µm ohne weiteres herstellbar.

Die elektrisch leitfähigen Polymere können auch pigmentiert sein, wobei alle bekannten Pigmente geeignet sind. Soll die Transparenz der elektrisch leitfähigen Polymerschichten nicht deutlich beeinflusst werden, sind allerdings stark deckende bzw. färbende Pigmente wie Ruß oder Graphit nicht geeignet.

Im Digitaldruckverfahren besteht die Möglichkeit jedes einzelne Wertdokument zu individualisieren. Mit dieser Funktion kann jedes einzelne Wertdokument mit speziellen einmaligen Informationen, beispielsweise laufenden Seriennummern, und dergleichen versehen werden und wird so zum individualisierten Einzelstück.

Die Seriennummer wird als elektronischer Schaltkreis im dualen Zahlensystem dargestellt. Dabei wird die Seriennummer von einer Dezimalzahl in reine Binärzahlen 0 und 1 umgewandelt (binäre Darstellung). Geeignet zur binären Darstellung sind alle binären Codes, beispielsweise der BCD-Code, der 3-Exzess Code, der Aiken-Code, der Gray-Code und dergleichen.
Um Texte bzw. Buchstaben darzustellen werden das Textalphabet und Satzzeichen in Bitfolgen codiert, wobei für die Darstellung aller Zeichen 7 Bits ausreichen. Dabei ergeben sich 128 verschiedene Möglichkeiten.

Ferner können im Digitaldruck auch gedruckte elektronische Schaltkreise, Transponder, Antennen und Chips aufgebracht werden, die ein zusätzliches Sicherheitsmerkmal darstellen.

Die aufgebrachte elektronische Seriennummer kann dann gegebenenfalls mit der visuell erkennbaren aufgedruckten Seriennummer verglichen werden und stellt dann ein zusätzliches Sicherheits- und Authentizitätsmerkmal dar.

Durch Applizieren eines Datenspeichers können weitere Informationen, wie beispielsweise Wert, Verfallsdatum, Informationen, die in die Relation zur Seriennummer stehen und dergleichen im Datenspeicher abgelegt werden.

## Patentansprüche

1. Wertdokumente mit Sicherheitsmerkmalen, **dadurch gekennzeichnet, dass** die Wertdokumente eine individualisierte elektronische Seriennummer und/oder einen elektronischen Datenspeicher aufweisen.

2. Wertdokumente nach Anspruch 1, **dadurch gekennzeichnet, dass** die elektronische Seriennummer und/oder der elektronische Datenspeicher mit Hilfe elektrisch leitfähiger Polymere oder elektrisch leitender Druckfarben erzeugt sind.

3. Wertdokumente nach Anspruch 2, **dadurch gekennzeichnet, dass** als elektrisch leitfähige Polymere Polyacetylen, Poly-p-phenylen, Polypyrrole, Polythiophene, Poly-p-phenylenvinylen, niedermolekulare makrocyclische Halbleiter, Organopolysilane, Polyschwefelnitrid und/oder Polyaniline und/oder deren Derivate verendet werden.

4. Wertdokumente nach einem der Ansprüche 2 oder 3, **dadurch gekennzeichnet, dass** als elektrisch leitfähige Polymere Polyanilin oder Polyethylendioxythlophen oder Polyethylendioxythiphenderivate verwendet werden.

5. Wertdokumente nach Anspruch 1, **dadurch gekennzeichnet, dass** die elektrische Leitfähigkeit der Druckfarben durch Zugabe von Graphit, Ruß, leitfähigen organischen oder anorganischen Polymeren, Metallpigmenten (beispielsweise Kupfer, Aluminium, Silber, Gold, Eisen, Chrom und dergleichen), Metalllegierungen wie Kupfer-Zink oder Kupfer-Aluminium, amorphen oder kristallinen keramischen Pigmenten, dotierten oder nicht dotierten Halbleitern oder lonenleitem eingestellt wird.

6. Wertdokumente nach einem der Ansprüche 1 bis 5, **dadurch gekennzeichnet, dass** die Seriennummer als elektronischer Schaltkreis im dualen Zahlensystem dargestellt ist.

7. Wertdokumente nach einem der Ansprüche 1 bis 6, **dadurch gekennzeichnet, dass** die elektronische Seriennummer in Relation zur visuell erkennbaren aufgedruckten Seriennummer eines Dokumentes steht.

8. Wertdokumente nach einem der Ansprüche 1 bis 5, **dadurch gekennzeichnet, dass** der Datenspeicher zusätzliche Informationen aufweist.

9. Wertdokumente nach Anspruch 6, **dadurch gekennzeichnet, dass** die zusätzlichen Informationen individualisiert sind.
